(19) Europäisches Patentamt
European Patent Office
Office européen des brevets

(11) **EP 0 694 331 B1**

(12) **FASCICULE DE BREVET EUROPEEN**

(45) Date de publication et mention
de la délivrance du brevet:
**04.11.1998 Bulletin 1998/45**

(51) Int. Cl.$^6$: **B01J 8/24**

(21) Numéro de dépôt: **95401762.0**

(22) Date de dépôt: **25.07.1995**

(54) **Procédé et dispositif de contrôle de la circulation interne dans un réacteur à lit fluidisé et réacteur équipé d'un tel dispositif**

Verfahren und Apparat zur Regelung der internen Zirkulation eines Wirbelbettreaktors und mit einem solchen Apparat versehener Reaktor

Process and device for controlling the internal circulation of a fluidised bed reactor and reactor provided with such a device

(84) Etats contractants désignés:
**BE DE DK ES GB SE**

(30) Priorité: **28.07.1994 FR 9409365**

(43) Date de publication de la demande:
**31.01.1996 Bulletin 1996/05**

(73) Titulaire:
**GEC ALSTHOM Stein Industrie
78140 Velizy-Villacoublay (FR)**

(72) Inventeurs:
• **Suraniti, Silvestre
F-75014 Paris (FR)**

• **Morin, Jean-Xavier
F-45170 Neuville aux Bois (FR)**

(74) Mandataire: **Fournier, Michel
c/o ALCATEL ALSTHOM,
Département de Propriété Industrielle,
30, avenue Kléber
75116 Paris (FR)**

(56) Documents cités:
**WO-A-91/03316          DE-A- 3 006 754**

• **PATENT ABSTRACTS OF JAPAN vol. 13, no. 365 (M-859) 15 Août 1989 & JP-A-01 121 616 (SANKI ENGINEERING CO LTD) 15 Mai 1989**

**Description**

La présente invention se rapporte à un procédé et à un dispositif de contrôle de la circulation interne dans un réacteur à lit fluidisé et à un réacteur équipé d'un tel dispositif.

Plus précisément, elle concerne un procédé et un dispositif de contrôle du débit de circulation interne des particules solides dans un lit fluidisé circulant comportant une zone inférieure où est injecté le gaz de fluidisation et une zone supérieure entourée par des parois.

Dans un réacteur de lit fluidisé circulant, une partie des solides sort du réacteur et assure la circulation externe tandis qu'une partie des solides descend le long des parois internes, cette circulation étant dite interne. L'importance du débit de cette circulation interne dépend principalement de la charge en solides dans le réacteur et des conditions de fluidisation.

Il n'existe aucun dispositif de contrôle du débit de cette circulation interne, par mesure en continu de ce débit. La présente invention propose un tel dispositif.

Selon l'invention, le procédé consiste à mesurer en continu et localement le débit de solides s'écoulant vers le bas le long desdites parois.

Selon l'invention, le dispositif de contrôle en continu du débit de circulation interne des particules solides dans un lit fluidisé circulant, pour la mise en oeuvre de ce procédé, comporte

- un bac de prélèvement de solides de circulation interne accolé à une desdites parois du réacteur et pourvu de moyens de fluidisation,
- une conduite d'évacuation desdits solides dudit bac vers un dispositif de mesure du débit desdits solides,
- une conduite de reversement desdits solides du dispositif de mesure vers l'intérieur du réacteur.

Un tel dispositif de contrôle permet de déceler les différences de débit de circulation interne des particules solides à divers endroits d'un réacteur à lit fluidisé circulant. Ainsi peuvent être décelés des phénomènes de concentration anormaux, par exemple des effets dits de cheminée ou des concentration hétérogènes dans les différents compartiments du réacteur. Ainsi les mesures utiles peuvent être prises, par exemple le réglage de l'alimentation en gaz de fluidisation dans le ou les compartiments concernés.

De préférence, le dispositif de mesure du débit est disposé à l'extérieur du réacteur.

Selon un mode de réalisation préféré, le dispositif de mesure du débit comporte

- un premier dispositif de mesure de la température des solides en sortie du bac,
- un dispositif de refroidissement des solides,
- un second dispositif de mesure de la température des solides en sortie du dispositif de refroidissement.

L'invention concerne également un dispositif de refroidissement destiné à constituer le dispositif de contrôle, comportant une conduite d'évacuation inclinée vers le bas, d'axe longitudinal x-x, pourvue d'un matériau réfractaire, recevant en partie haute les particules solides et associée à un agencement de refroidissement comprenant dans un bac de réception un ensemble de tubes d'échange de chaleur où circule un fluide caloporteur et un ensemble d'aération permettant l'écoulement des particules solides; selon l'invention, le bac de réception est constitué par ladite conduite inclinée d'au moins 5 degrés par rapport à un plan horizontal.

De préférence, ladite conduite est inclinée de 5 à 20 degrés.

Avantageusement, l'ensemble de tubes d'échange est constitué de tubes parallèles à l'axe x-x disposé dans la conduite.

Ladite conduite peut être équipée d'une paroi de retenue des particules solides située en aval de l'ensemble de tubes d'échange, avantageusement, transversale et extractible.

Pour ce faire, ladite paroi de retenue est constituée d'éléments allongés superposés et amovibles.

Les tubes d'échange sont de préférence des tubes doubles concentriques, l'entrée et la sortie du fluide caloporteur étant situées d'un même côté de la conduite.

L'ensemble d'aération comprend des buses traversant la conduite dans sa partie inférieure et alimentées par un collecteur compartimenté situé sous la conduite.

L'invention concerne également un dispositif de mesure de température d'un flux de solides destiné à former le second dispositif de mesure constituant le dispositif de contrôle. Il comprend

- des sondes de détermination de la température à plusieurs niveaux de hauteur de la paroi de retenue,
- une sonde de détermination de la température disposé en aval de ladite paroi de retenue dans un prolongement de la conduite pourvu de buses de fluidisation.

L'invention se rapporte enfin à un réacteur équipé d'au moins un dispositif de contrôle; il comporte plusieurs dispositifs de contrôle répartis sur sa périphérie intérieure, ces dispositifs étant disposés à une même hauteur.

Selon un mode de réalisation préféré, le réacteur comportant des lits fluidisés denses internes en communication avec l'intérieur du réacteur par leur partie supérieure qui reçoit les matières solides tombant le long des parois de la zone supérieure et les renvoie en partie par débordement vers la zone inférieure tout le long et au-dessus des parois de déversement, au moins certains dispositifs de contrôle ont leur bac de prélèvement formé par un compartiment du ou des lits internes.

L'invention est décrite ci-après plus en détail à
l'aide de figures ne représentant qu'un mode de réalisation préféré de l'invention.

La figure 1 est une vue en coupe verticale d'un
réacteur à lit fluidisé circulant.

La figure 2 est une vue en coupe verticale d'un dispositif de contrôle conforme à l'invention.

La figure 3 est une vue en coupe selon IV-IV de la
figure 2.

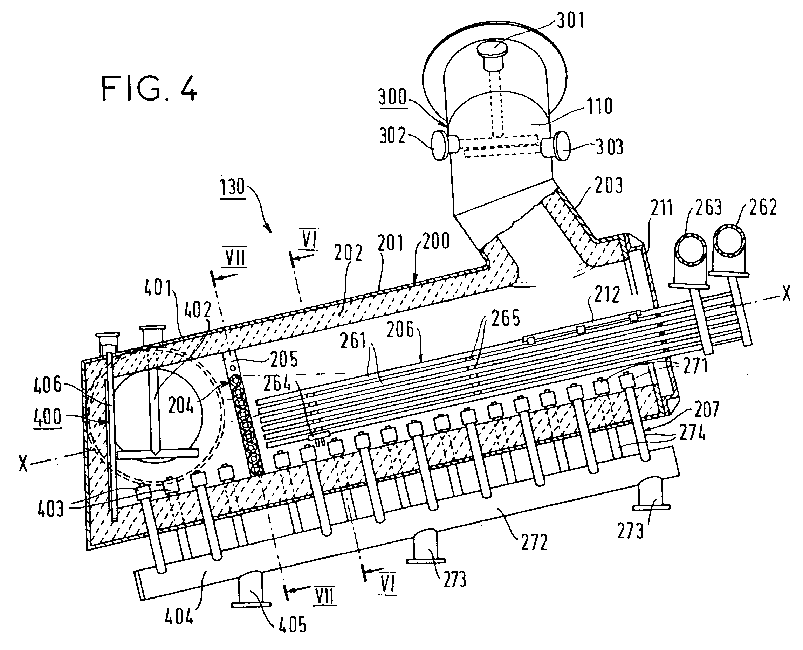

La figure 4 est une vue en coupe longitudinale d'un
dispositif de refroidissement conforme à l'invention.

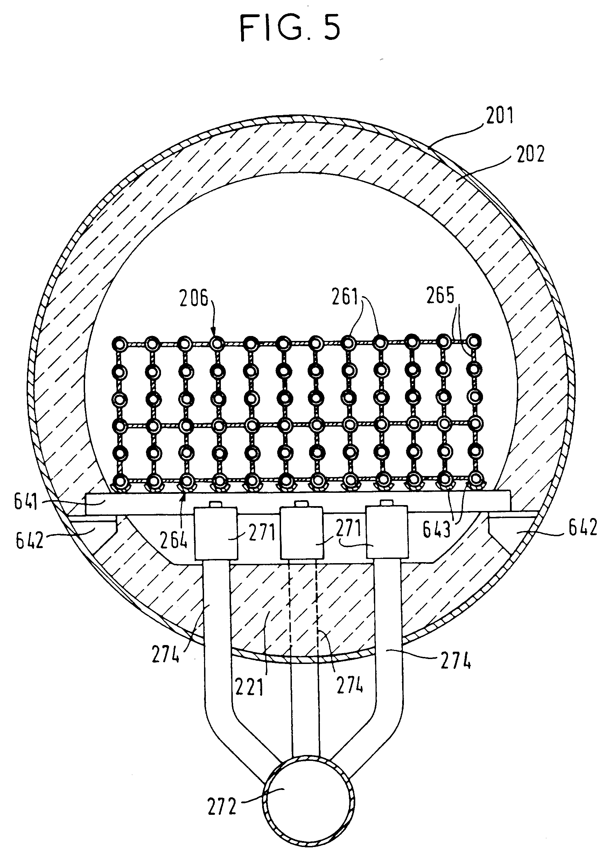

La figure 5 est une vue en coupe selon VI-VI de la
figure 4.

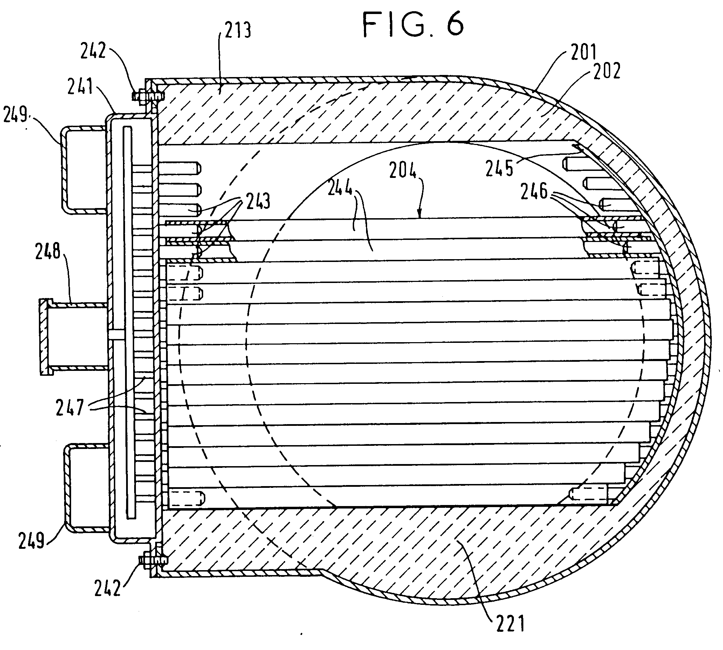

La figure 6 est une vue en coupe selon VII-VII de la
figure 4.

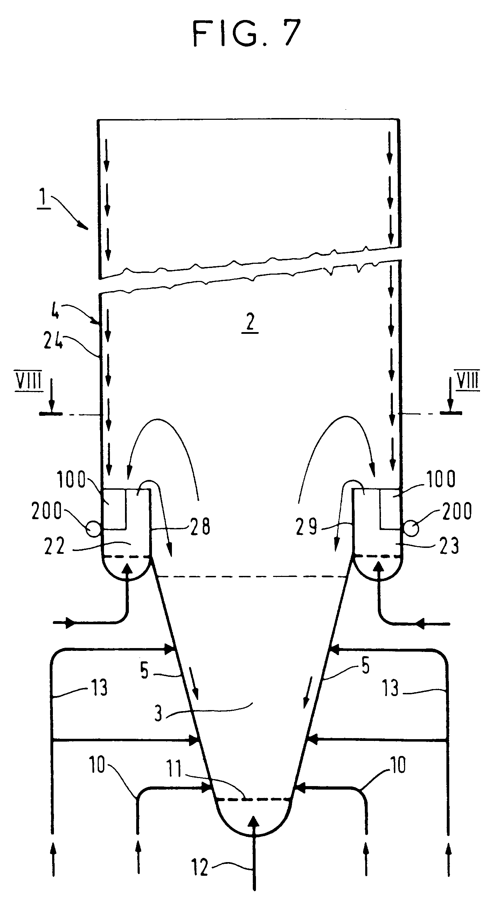

La figure 7 est une vue en coupe verticale d'un
réacteur à lit fluidisé circulant équipé de lits internes et
de dispositifs conformes à l'invention.

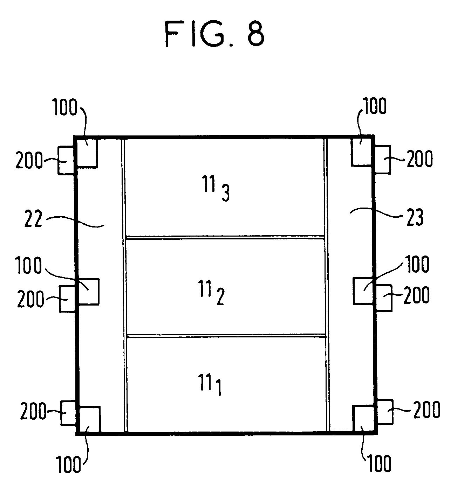

La figure 8 est une vue en coupe selon VIII-VIII de
la figure 7.

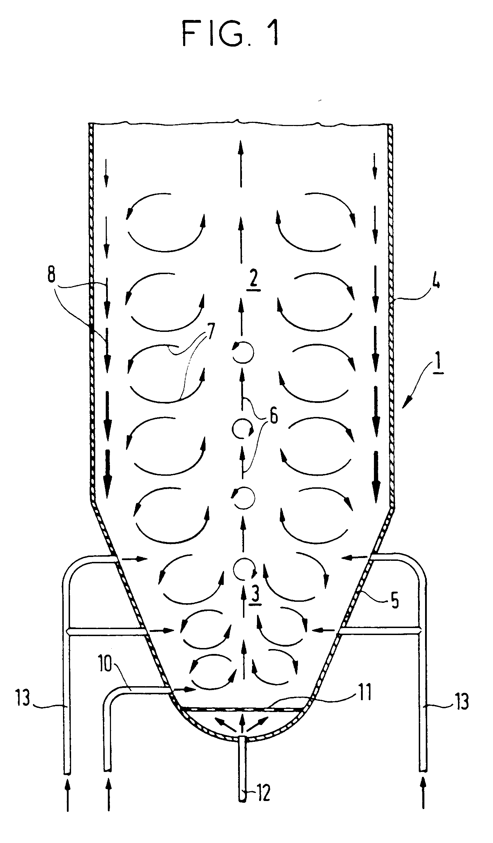

Sur la figure 1 qui correspond à un fonctionnement
classique de réacteur à lit circulant, ce dernier comporte
une zone inférieure 3 de section croissante vers le haut
et une zone supérieure parallélépipèdique 2. La zone
inférieure 3 est pourvue d'une grille de fluidisation 11,
de moyens d'injection d'air primaire 12 en-dessous de
la grille 11, de moyens d'injection d'air secondaire 13
au-dessus de la grille 11 et de moyens d'introduction de
combustible 10. Les parois 5 entourant cette zone inférieure 3 sont pourvues de tubes d'échange thermique.
La zone supérieure 2 est entourée par des parois 4
munies de tubes d'échange thermique.

Les particules solides s'élèvent au-dessus de la
grille 11 vers le haut du réacteur selon les flèches 6.
Ces particules tendent à s'écarter vers les parois 4, 5 et
à retomber vers le bas. Toutefois, une partie des particules les plus fines est réentraînée vers le haut, suivant
des mouvements tourbillonnaires tels que 7. Les autres
particules se rapprochent des parois 4, 5 et s'écoulent
le long de celles-ci vers le bas selon les flèches 8.

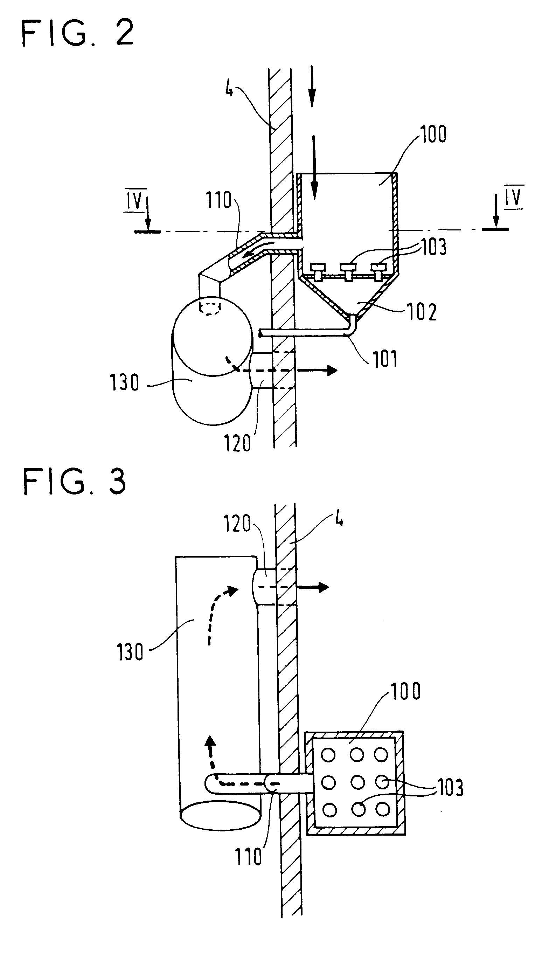

Un mode de réalisation préféré du dispositif de contrôle en continu du débit de circulation interne des particules solides conforme à l'invention est représenté sur
les figures 2 et 3.

Il comporte

- un bac de prélèvement 100 de solides de circulation interne accolé à une desdites parois 4 du réacteur et pourvu de moyens de fluidisation constitués
de façon connue en soi d'une conduite d'alimentation en gaz de fluidisation 101 reliée à une chambre
appelée boîte à vent 102 alimentant des buses 103
réparties sur le fond ou sole du bac 100; la fluidisation est réglée en fonction de l'écart de pression
dans le bac 100 afin d'empêcher tout débordement
de celui-ci; ce bac 100 est de préférence en acier réfractaire;
- une conduite d'évacuation 110 desdits solides dudit
bac 100 vers un dispositif de mesure 130 du débit
desdits solides disposé à l'extérieur du réacteur,
- une conduite de reversement 120 desdits solides
du dispositif de mesure 130 vers l'intérieur du réacteur.

Un mode de réalisation préféré du dispositif de
mesure du débit 130 est représenté sur la figure 4. Il
comporte

- un premier dispositif de mesure de la température
300 des solides en sortie du bac 100,
- un dispositif de refroidissement des solides 200,
- un second dispositif de mesure de la température
des solides 400 en sortie du dispositif de refroidissement 200.

Comme représenté sur la figure 4, le dispositif de
refroidissement conforme à l'invention comporte une
conduite d'évacuation 201 inclinée vers le bas d'un
angle de 5 à 20 degrés par rapport à un plan horizontal,
d'axe longitudinal x-x, pourvue d'un revêtement réfractaire 202 assurant l'isolation thermique et la protection
mécanique, recevant en partie haute par une gaine
d'arrivée 203 des particules solides chaudes.

La conduite inclinée 201 est équipée d'un ensemble de fluidisation des particules solides 207 et d'une
paroi transversale 204 de retenue des particules solides. Ainsi est formé à l'intérieur de la conduite 201 un
bac fluidisé de réception des particules solides entre la
gaine d'entrée 203 et la paroi 204. Cette paroi 204 ne
s'étend que sur une partie de la section interne de la
conduite 201 et délimite en partie haute un passage
205 d'évacuation des particules.

Cette paroi de retenue 204 est extractible et constituée d'éléments allongés superposés et amovibles
comme il sera précisé plus loin à l'aide de la figure 6.

Dans ce bac de réception est disposé un agencement de refroidissement comprenant un ensemble de
tubes d'échange de chaleur 206 où circule un fluide
caloporteur.

L'ensemble de tubes d'échange 206 est constitué
de tubes 261 parallèles à l'axe x-x disposés en amont
de la paroi transversale. Les tubes d'échange 261 sont
des tubes doubles concentriques, l'entrée 262 et la sortie 263 du fluide étant situés d'un même côté de la conduite 201, à savoir sur le côté externe de la paroi
frontale la plus haute 211 de la conduite 201. Avantageusement, cet ensemble de tubes 206 est solidaire de
la paroi frontale 211 la plus haute de la conduite 201.
Ainsi, par démontage de cette paroi 211, en arrêt du
réacteur, l'ensemble de tubes d'échange 206 peut être
démonté et être, si besoin est, entretenu ou réparé. Afin
de maintenir en place cet ensemble de tubes ainsi disposé en porte-à-faux, un dispositif de maintien 264 est
prévu à proximité de l'extrémité des tubes 261 proche de la paroi de retenue 204.

Les tubes d'échange thermique 261 supérieurs sont protégés par des boucliers métalliques 212 en face de la gaine d'entrée 203.

Cet ensemble de tubes d'échange 206 sera décrit ci-après plus en détail à l'aide de la figure 5.

L'ensemble de fluidisation 207 comprend des buses 271 traversant la conduite 201 dans la partie inférieure du bac de réception ainsi formé et alimentées par un collecteur 272 située sous la conduite 201. Selon la longueur du bac de réception plusieurs collecteurs 272 peuvent être prévus. Dans ces collecteurs 272 est injecté le gaz de fluidisation par les entrées 273.

Comme visible sur la figure 5, l'ensemble de tubes d'échange 206 comporte un certain nombre de tubes 261 disposés parallèlement les uns aux autres et maintenus par des ailettes soudées 265 réparties transversalement et longitudinalement pour former un ensemble de tubes rigide. A proximité de l'extrémité en porte-à-faux est prévu un dispositif de maintien 264 constitué d'une traverse 641 fixée sur deux consoles 642 soudées à l'enveloppe métallique externe de la conduite 201 et supportant des berceaux 643 dans lesquels sont posés les tubes inférieurs de l'ensemble de tubes 206. Chaque tube d'échange 261 est constitué de deux tubes concentriques, dont l'interne est relié à l'entrée de fluide caloporteur 262 et l'externe à la sortie de fluide caloporteur 263, ces deux tubes étant en communication à leur extrémité proche de la paroi transversale 204.

Les températures d'entrée $t_{ee}$ et de sortie $t_{se}$ du fluide caloporteur (en général de l'eau) sont mesurées à l'entrée 262 et à la sortie 263, le débit de fluide $d_e$ étant connu.

Transversalement, plusieurs buses de fluidisation 271 peuvent être disposées en alignement, ces buses étant reliées au collecteur 272 par les conduites 274 d'alimentation en gaz. A l'intérieur de la conduite 201, ces conduites d'alimentation en gaz de fluidisation 274 sont noyées dans une surépaisseur 221 de matériau réfractaire.

La paroi de retenue 204 est particulièrement visible sur la figure 6.

A l'emplacement d'insertion de cette paroi 204, la conduite 201 présente une ouverture latérale délimitée par une partie de prolongement 213 afin que cette ouverture soit plane et rectangulaire. Dans cette ouverture, est introduite la paroi 204 qui est de type tiroir extractible.

Elle comprend une partie externe 241 en forme de couvercle qui vient s'appliquer et se fixer sur la partie de prolongement 213 de la conduite 201 par exemple par des vis 242. Cette partie externe 241 supporte la partie interne qui constitue la paroi de retenue en soi. Pour ce faire, sur la partie externe 241 sont fixés des premiers embouts tubulaires 243 alignés sur toute la hauteur du volume intérieur de la conduite 201. Sur ces premiers embouts 243 sont emboîtés des tubes 244 constituant des éléments allongés superposés et amovibles. Ces tubes 244 sont de longueur telle qu'ils puissent être à leur autre extrémité emboîtés dans une pièce arrondie 245 supportant en correspondance des seconds embouts tubulaires 246 alignés sur toute la hauteur du volume intérieure de la conduite 201. Une fois une certain nombre de tubes 244 emboîtés sur la partie externe 241 et sur la pièce arrondie 245 et la paroi 204 insérée dans la conduite 201, la pièce arrondie 245 vient s'appliquer contre la paroi interne de la conduite 201.

Une fois la hauteur nécessaire de la paroi de retenue 204 déterminée, afin d'obliger le flux de particules à noyer l'ensemble de tubes d'échange, le nombre de tubes 244 à installer est déterminé. Eventuellement, le fonctionnement du dispositif étant arrêté et pour permettre un fonctionnement optimal du dispositif de refroidissement, la paroi transversale 4 est enlevée, le nombre de tubes 244 adéquat mis en place par emboîtement et la paroi 204 est de nouveau fixée pour permettre le fonctionnement du dispositif de refroidissement.

La partie externe 241 comporte des canaux 247 dans lesquels sont disposés des fils thermocouples permettant la détermination de la température à plusieurs niveaux de hauteur de la paroi de retenue 204. Elle comporte pour permettre cette détermination, une boîte externe accessible de connexion 248 ainsi que des moyens de préhension 249 pour le retrait et la mise en place de la paroi de retenue 204.

Un agencement de tubes 244 et d'embouts tubulaires 243 et 246 a été choisi, car de fabrication et de constitution relativement simple et fiable. Cependant, il peut être réalisé une telle paroi transversale de hauteur réglable avec des éléments superposés de forme différente.

Le premier dispositif de mesure de la température 300 des solides en sortie du bac 100 est visible sur la figure 4.

Il est disposé en amont de la conduite 201 du dispositif de refroidissement 200 et comporte trois sondes de mesure de température 301, 302, 303 traversant la conduite d'évacuation 110. Ces sondes sont disposées éventuellement à des niveaux différents et réparties sur la périphérie de la conduite d'évacuation 110, décalées de 120° l'une de l'autre. Elle permettent de déterminer par moyenne la température $t_{es}$ d'entrée des solides dans le dispositif de refroidissement 200.

Le second dispositif de mesure de la température des solides 400 en sortie du dispositif de refroidissement 200 est visible sur la figure 4.

Il comprend d'une part des sondes de détermination de la température à plusieurs niveaux de hauteur de la paroi de retenue 204. Comme il a été vu plus haut, ce sont de préférence des fils thermocouples disposés dans les tubes 244 et passant dans les canaux 247 de la partie externe 241 de la paroi de retenue 204.

Il comprend d'autre part une sonde 402 de détermination de la température en forme de T renversé, disposée en aval de ladite paroi de retenue 204 dans un prolongement 401 de la conduite 201 pourvu de buses de fluidisation 403. Ces buses 403 sont agencées comme celles du dispositif de refroidissement 200. Elles traversent le prolongement de conduite 401 dans sa partie inférieure et sont alimentées par un collecteur 404 situé sous le prolongement de conduite 401. Dans ce collecteur 404 est injecté le gaz de fluidisation par l'entrée 405. Cette fluidisation supplémentaire permet d'homogénéiser le flux de particules solides dans le prolongement de conduite 401.

Eventuellement, une autre sonde 406 rectiligne peut être disposée à l'extrémité du prolongement de conduite 401.

Ainsi, grâce à ce second dispositif de mesure 400 de la température, peut être déterminée par moyenne la température de sortie $t_{ss}$ des particules solides en sortie du dispositif de refroidissement 200.

Par calcul du bilan enthalpique, il est donc possible de déterminer le débit de solides traversant le dispositif de refroidissement 200. Plus exactement, ce bilan mène à la relation

$$d_s \, c_{ps} \, (t_{es}\text{-}t_{ss}) = d_e \, c_{pe} \, (t_{se}\text{-}t_{ee})$$

$d_s$ étant le débit des particules solides recherché, $t_{es}$, $t_{ss}$, $d_e$, $t_{se}$, $t_{ee}$ étant mesurés comme vu plus haut et $c_{ps}$ et $c_{pe}$ étant les chaleurs massiques des particules solides et du fluide caloporteur.

Un système de régulation associé permet d'effectuer ces calculs en continu.

Il est possible d'équiper un réacteur d'au moins un dispositif de contrôle comme décrit précédemment.

Il est connu, par exemple de la demande de brevet français n°2 690 512 déposée par la Déposante, d'équiper le réacteur de lits fluidisés denses internes 22, 23, comme représenté sur la figure 7. Ces lits fluidisés denses 22, 23 sont en communication avec l'intérieur du réacteur par leur partie supérieure qui reçoit les matières solides tombant le long des parois 4 de la zone supérieure 2 et les renvoie en partie par débordement vers la zone inférieure 3 tout le long et au-dessus des parois de déversement 28, 29.

La zone inférieure 3 est pourvue d'une grille de fluidisation 11 pouvant être compartimentée et de moyens d'injection d'air primaire 12 en-dessous de la grille 11. Des moyens d'injection d'air secondaire 13 au-dessus de la grille 11 et des moyens d'introduction de combustible 10 sont également prévus de façon classique en soi. Les parois 5 entourant la zone inférieure 3 sont pourvues de tubes d'échange thermique et la zone supérieure 2 est entourée par des parois 4 munies de tubes d'échange thermique.

La figure 8 est une vue en coupe horizontale du réacteur représenté sur la figure 7. Il comporte plusieurs dispositifs de contrôle répartis sur sa périphérie intérieure, ces dispositifs étant disposés à une même hauteur.

Il est bien entendu qu'un dispositif de contrôle conforme à l'invention peut être installé en tout lieu du réacteur où il est souhaité de réaliser un contrôle en continu de la circulation interne des particules solides. Avantageusement, comme représenté sur les figures 7 et 8, de tels dispositifs 100, 200 sont placés sur les parois latérales, à chaque compartimentage de la grille de fluidisation.

Par exemple, si latéralement le réacteur est compartimenté en trois $11_1$, $11_2$, $11_3$ comme représenté sur la figure 8, trois dispositifs 100, 200 sont disposés sur les parois latérales, un à chaque coin et un au milieu de ces parois.

Ainsi, selon les indications de ces dispositifs de contrôle, la répartition longitudinale et transversale de l'alimentation en gaz des compartiments peut être réglée en conséquence.

Avantageusement, les dispositifs de contrôle sont disposés dans un plan horizontal au-dessus des lits internes 22, 23 ou comme représentés sur les figures 7 et 8, au niveau de ces lits internes. Dans ce cas, les dispositifs de contrôle disposés sur les parois latérales du réacteur ont avantageusement leur bac de prélèvement 100 formé par un compartiment du lit interne 22, 23 correspondant.

## Revendications

1. Procédé de contrôle en continu du débit de circulation interne des particules solides dans un lit fluidisé circulant comportant une zone inférieure (3) où est injecté le gaz de fluidisation et une zone supérieure (2) entourée par des parois (4), caractérisé en ce qu'il consiste à mesurer en continu et localement le débit de solides s'écoulant vers le bas le long desdites parois (4).

2. Dispositif de contrôle en continu du débit de circulation interne des particules solides dans un lit fluidisé circulant comportant une zone inférieure (3) où est injecté le gaz de fluidisation et une zone supérieure (2) entourée par des parois (4), pour la mise en oeuvre du procédé selon la revendication 1, caractérisé en ce qu'il comporte

   - un bac de prélèvement (100) de solides de circulation interne accolé à une desdites parois (4) du réacteur et pourvu de moyens de fluidisation (102),
   - une conduite d'évacuation (110) desdits solides dudit bac (100) vers un dispositif (130) de mesure du débit desdits solides,
   - une conduite de reversement (120) desdits solides du dispositif de mesure (130) vers l'intérieur du réacteur.

3. Dispositif selon la revendication 2, caractérisé en ce que le dispositif de mesure du débit (130) est disposé à l'extérieur du réacteur.

4. Dispositif selon la revendication 3, caractérisé en ce que le dispositif de mesure du débit (130) comporte

   - un premier dispositif (300) de mesure de la température des solides en sortie du bac de prélèvement (100),
   - un dispositif de refroidissement des solides (200),
   - un second dispositif (400) de mesure de la température des solides en sortie du dispositif de refroidissement (200).

5. Dispositif selon la revendication 4 dont le dispositif de refroidissement comporte une conduite d'évacuation (201) inclinée vers le bas, d'axe longitudinal x-x, pourvue d'un matériau réfractaire (202), recevant en partie haute les particules solides et associée à un agencement de refroidissement comprenant dans un bac de réception un ensemble de tubes d'échange de chaleur (206) où circule un fluide caloporteur et un ensemble d'aération permettant l'écoulement des particules solides (207), caractérisé en ce que le bac de réception est constitué par ladite conduite (201) inclinée d'au moins 5 degrés par rapport à un plan horizontal.

6. Dispositif selon la revendication 5, caractérisé en ce que ladite conduite (201) est inclinée de 5 à 20 degrés.

7. Dispositif selon l'une des revendications 5 ou 6, caractérisé en ce que l'ensemble de tubes d'échange (206) est constitué de tubes (261) parallèles à l'axe x-x disposé dans la conduite (201).

8. Dispositif selon l'une des revendications 5 à 7, caractérisé en ce que ladite conduite est équipée d'une paroi de retenue (204) des particules solides située en aval de l'ensemble de tubes d'échange (206).

9. Dispositif selon la revendication 8, caractérisé en ce que ladite paroi de retenue (204) est transversale et extractible.

10. Dispositif selon la revendication 9, caractérisé en ce que ladite paroi de retenue (204) est constituée d'éléments (244) allongés superposés et amovibles.

11. Dispositif selon la revendication 7, caractérisé en ce que les tubes d'échange (261) sont des tubes doubles concentriques, l'entrée (262) et la sortie (263) du fluide caloporteur étant situées d'un même côté de la conduite (201).

12. Dispositif selon l'une des revendications 5 à 11, caractérisé en ce que l'ensemble d'aération (207) comprend des buses (271) traversant la conduite (201) dans sa partie inférieure et alimentées par un col lecteur compartimenté (272) situé sous la conduite (201).

13. Dispositif selon l'une des revendications 5 à 10, caractérisé en ce que le second dispositif de mesure de température d'un flux de solides, comprend

    - des sondes de détermination de la température à plusieurs niveaux de hauteur de la paroi de retenue (204),
    - une sonde (402) de détermination de la température disposé en aval de ladite paroi de retenue (204) dans un prolongement de la conduite (201) pourvu de buses de fluidisation (403).

14. Réacteur équipé d'au moins un dispositif de contrôle conforme à l'une des revendications 2 à 4, caractérisé en ce qu'il comporte plusieurs dispositifs de contrôle répartis sur sa périphérie intérieure, ces dispositifs étant disposés à une même hauteur.

15. Réacteur selon la revendication 14 comportant des lits fluidisés denses internes (22, 23) en communication avec l'intérieur du réacteur par leur partie supérieure qui reçoit les matières solides tombant le long des parois (4) de la zone supérieure (2) et les renvoie en partie par débordement vers la zone inférieure (3) tout le long et au-dessus des parois de déversement (28, 29) réacteur caractérisé en ce qu'au moins certains dispositifs de contrôle ont leur bac de prélèvement (100) formé par un compartiment du ou des lits internes (22, 23).

**Claims**

1. A method of continuously monitoring the internal circulation flow-rate of solid particles in a circulating fluidized bed including a bottom zone (3) into which the fluidization gas is injected, and a top zone (2) surrounded by walls (4), said method being characterized in that it consists in continuously and locally measuring the flow-rate of solids running down along said walls (4).

2. A monitoring device for continuously monitoring the internal circulation flow-rate of solid particles in a circulating fluidized bed including a bottom zone (3) into which the fluidization gas is injected, and a top zone (2) surrounded by walls (4), for implementing the method according to claim 1, said device being characterized in that it comprises:

a sampling tank (100) for sampling internal circulation solids, which tank is fixed against one of said walls (4) of the reactor and is provided with fluidization means;

a removal pipe (110) for removing said solids from said tank (100) and conveying them to a measuring device (130) for measuring the flow-rate of said solids; and

a return pipe (120) for returning said solids from the measuring device (130) to the inside of the reactor.

3. A device according to claim 2, characterized in that the measuring device (130) for measuring the flow-rate is disposed outside the reactor.

4. A device according to claim 3, characterized in that the flow-rate measuring device (130) comprises:

a first temperature measuring device (300) for measuring the temperature of said solids at the output of the sampling tank (100);
a cooling device (200) for cooling the solids; and
a second temperature measuring device (400) for measuring the solids at the output of the cooling device (200).

5. A device according to claim 4 having a cooling device including a removal pipe (201) which slopes downwards, which has a longitudinal axis x-x, which is provided with a lining of refractory material (202), which receives solid particles at its top, and which is associated with a cooling facility comprising, in a solid-receiving tank, a set of heat-exchange tubes (206) through which a cooling fluid flows and an air-feed assembly (207) enabling the solid particles to flow, said cooling device being characterized in that the solid-receiving tank is constituted by said pipe (201) which slopes at at least 5 degrees relative to a horizontal plane.

6. A device according to claim 5, characterized in that said pipe (201) slopes at an angle in the range 5 degrees to 20 degrees.

7. A device according to claim 5 or 6, characterized in that the set of heat-exchange tubes (206) is constituted by tubes (261) that are disposed parallel to axis x-x in the pipe (201).

8. A device according to any one of claims 5 to 7, characterized in that said pipe is provided with a retaining wall (204) for retaining solid particles, which wall is situated downstream from the set of heat-exchange tubes (206).

9. A device according to claim 8, characterized in that said retaining wall (204) is a transverse wall that is extractable.

10. A device according to claim 9, characterized in that said retaining wall (204) is made up of superposed elongate elements (244) that are removable.

11. A device according to claim 7, characterized in that the heat-exchange tubes (261) are coaxial pairs of tubes, both the inlet (262) and the outlet (263) for the cooling fluid being situated at the same end of the pipe (201).

12. A device according to any one of claims 5 to 11, characterized in that the air-feed assembly (207) comprises nozzles (271) passing through the bottom of the pipe (201) and fed via a compartmentalized manifold (272) situated under the pipe (201).

13. A device according to any one of claims 5 to 10, characterized in that the second temperature measuring device for measuring the temperature of a flow of solids comprises:

temperature-determination probes at a plurality of heights up the retaining wall (204); and
a temperature-determination probe (402) disposed downstream from said retaining wall (204) in an extension of the pipe (201), which extension is provided with fluidization nozzles (403).

14. A reactor provided with at least one monitoring device according to any one of claims 2 to 4, said reactor being characterized in that it includes a plurality of monitoring devices distributed over its inside periphery, the devices being disposed at the same height.

15. A reactor according to claim 14, including internal bubbling beds (22, 23) communicating with the inside of the reactor via their tops which receive solid matter falling down along the walls (4) of the top zone (2), and which return the solid matter in part to the bottom zone (3) by it overflowing over the entire lengths of walls acting as overflow walls or "weirs" (28, 29), said reactor being characterized in that at least some of the monitoring devices have their respective sampling tanks (100) formed by respective compartments of the internal bed(s) (22, 23).

**Patentansprüche**

1. Verfahren zur kontinuierlichen Kontrolle des Durchsatzes der internen Zirkulation von festen Teilchen in einem zirkulierenden Wirbelbett, das einen unteren Bereich (3), wo das Verwirbelungsgas eingespeist wird, und einen oberen Bereich (2) umfaßt, der von Wänden (4) umgeben ist, dadurch gekennzeichnet, daß es darin besteht, kontinuierlich und lokal den Durchsatz an entlang der Wände (4) nach unten strömenden Feststoffen zu messen.

2. Vorrichtung zur kontinuierlichen Kontrolle des Durchsatzes der internen Zirkulation von festen Teilchen in einem zirkulierenden Wirbelbett mit einem unteren Bereich (3), wo das Verwirbelungsgas eingespeist wird, und einem oberen Bereich (2), der von Wänden (4) umgeben ist, zur Anwendung des Verfahrens nach Anspruch 1, dadurch gekennzeichnet, daß sie umfaßt

   - einen Behälter (100) zur Entnahme von Feststoffen der internen Zirkulation, der an einer der Wände (4) des Reaktors angebracht und mit Verwirbelungsmitteln (102) versehen ist,

   - eine Abführungsleitung (110) zum Abführen der Feststoffe vom Behälter (100) zu einer Vorrichtung (130) zum Messen des Durchsatzes der Feststoffe,

   - eine Rückführungsleitung (120) zum Rückführen der Feststoffe von der Meßvorrichtung (130) ins Innere des Reaktors.

3. Vorrichtung nach Anspruch 2, dadurch gekennzeichnet, daß die Vorrichtung zum Messen des Durchsatzes (130) außerhalb des Reaktors angeordnet ist.

4. Vorrichtung nach Anspruch 3, dadurch gekennzeichnet, daß die Vorrichtung zum Messen des Durchsatzes (130) umfaßt

   - eine erste Temperaturmeßvorrichtung (300) zum Messen der Temperatur der Feststoffe am Ausgang des Entnahmebehälters (100),

   - eine Vorrichtung zum Kühlen der Feststoffe (200),

   - eine zweite Temperaturmeßvorrichtung (400) zum Messen der Temperatur der Feststoffe am Ausgang der Kühlvorrichtung (200) .

5. Vorrichtung nach Anspruch 4, bei der die Kühlvorrichtung eine nach unten geneigte Abführungsleitung (201) mit Längsachse x-x hat, die mit einem hitzefesten Material (202) versehen ist, im oberen Bereich die festen Teilchen aufnimmt und einer Kühlanordnung zugeordnet ist, die in einem Aufnahmebehälter eine Anordnung von Wärmetauscherrohren (206), wo ein Wärmeträgerfluid zirkuliert, und eine Belüftungsanordnung umfaßt, die das Fließen der festen Teilchen (207) ermöglicht, dadurch gekennzeichnet, daß der Aufnahmebehälter durch die unter wenigstens 5° in Bezug auf eine horizontale Ebene geneigte Leitung (201) gebildet ist.

6. Vorrichtung nach Anspruch 5, dadurch gekennzeichnet, daß die Leitung (201) unter 5 bis 20° geneigt ist.

7. Vorrichtung nach einem der Ansprüche 5 oder 6, dadurch gekennzeichnet, daß die Anordnung von Wärmetauscherrohren (206) aus in der Leitung (201) angeordneten, zur Achse x-x parallelen Rohren (261) gebildet ist.

8. Vorrichtung nach einem der Ansprüche 5 bis 7, dadurch gekennzeichnet, daß die Leitung mit einer Rückhaltewand (204) zum Rückhalten der festen Teilchen ausgestattet ist, die stromabwärts von der Anordnung von Wärmetauscherrohren (206) angeordnet ist.

9. Vorrichtung nach Anspruch 8, dadurch gekennzeichnet, daß die Rückhaltewand (204) quer orientiert ist und herausziehbar ist.

10. Vorrichtung nach Anspruch 9, dadurch gekennzeichnet, daß die Rückhaltewand (204) aus übereinander liegenden und entfernbaren langgestreckten Elementen (244) gebildet ist.

11. Vorrichtung nach Anspruch 7, dadurch gekennzeichnet, daß die Wärmetauscherrohre (261) konzentrische Doppelrohre sind, wobei der Eingang (262) und der Ausgang (263) des Wärmeträgerfluids auf einer gleichen Seite der Leitung (201) angeordnet sind.

12. Vorrichtung nach einem der Ansprüche 5 bis 11, dadurch gekennzeichnet, daß die Belüftungsanordnung (207) Düsen (271) umfaßt, die die Leitung (201) in ihrem unteren Bereich durchqueren und durch einen unterteilten Verteiler (272) versorgt werden, der unter der Leitung (201) angeordnet ist.

13. Vorrichtung nach einem der Ansprüche 5 bis 10, dadurch gekennzeichnet, daß die zweite Temperaturmeßvorrichtung eines Feststofflusses umfaßt

   - Sonden zur Bestimmung der Temperatur in mehreren Höhen der Rückhaltewand (204),

   - eine Sonde (402) zur Bestimmung der Temperatur, die stromabwärts von der Rückhaltewand (204) in einer Verlängerung der Leitung (201) angeordnet ist, die mit Verwirbelungsdüsen (403) versehen ist.

**14.** Reaktor mit wenigstens einer Kontrollvorrichtung nach einem der Ansprüche 2 bis 4, dadurch gekennzeichnet, daß er mehrere auf seine innere Peripherie verteilte Kontrollvorrichtungen umfaßt, wobei diese Vorrichtungen auf einer gleichen Höhe angeordnet sind.

**15.** Reaktor nach Anspruch 14 mit internen dichten Wirbelbetten (22, 23), die mit dem Inneren des Reaktors durch ihren oberen Bereich in Verbindung stehen, der die entlang der Wände (4) des oberen Bereiches (2) herabfallenden Feststoffe aufnimmt und sie teilweise durch Überlaufen in den unteren Bereich (3) entlang der Überlaufwände (20, 29) und über diese hinweg umlenkt, wobei der Reaktor dadurch gekennzeichnet ist, daß wenigstens bei gewissen der Kontrollvorrichtungen der Entnahmebehälter (100) durch eine Kammer des oder der internen Betten (22, 23) gebildet ist.

# FIG. 1

# FIG. 2

# FIG. 3

FIG. 4

EP 0 694 331 B1

# FIG. 5

# FIG. 6

EP 0 694 331 B1

# FIG. 7

# FIG. 8